# EUROPEAN PATENT SPECIFICATION

(11) **EP 1 688 827 B1**
(45) Date of publication and mention of the grant of the patent: **26.09.2012**
(21) Application number: 05025520.7
(22) Date of filing: 23.11.2005
(51) Int. Cl.: G06F 3/023

(54) **Universal X,Y-axis positioning input method**
Universelles Eingabeverfahren zur X,Y-Achsenpositionierung
Procédé d'entrée de positionnement universel selon les axes X et Y

(30) Priority: 05.02.2005 CN 200510007935
(43) Date of publication of application: 09.08.2006
(73) Proprietor: Cheng, Yu-Chih, Taipei (TW)
(72) Inventor: Cheng, Yu-Chih, Taipei (TW)
(74) Representative: Viering, Jentschura & Partner

(56) References cited:
- WO-A1-01/82045
- US-A- 3 967 273
- US-A- 5 184 315
- US-A- 5 990 890

## Description

### BACKGROUND OF THE INVENTION

### Field of the Invention

The present invention generally relates to an input method and an input apparatus applicable for texts, alphabets, symbols and/ or function keys of any languages, and more particularly to those applied in electronic devices such as a mobile phone or a remote control having number keys, direction keys, and a display screen.

### Description of the Related Art

At present, the input of characters or texts into a common mobile phone or remote control divides the character or text into a plurality of groups corresponding to a plurality of press keys on the mobile phone. Since the number of characters is much larger than the number of press keys, therefore each press key corresponds to a plurality of characters, and each key disposed on a very limited space of a keyboard is engraved with several small characters. Such arrangement not only gives a very small size of characters and a difficulty of recognizing the small characters, but also makes it difficult for users to find their desired character, particularly for those who have bad eyesight. Furthermore, one press key corresponds to several characters, and it thus requires additional procedure such as adding more steps or memories to improve the accuracy of the input. Some manufacturers make use of a virtual keyboard, which is displayed on a screen, so that users can press specific keys to select their desired character, or use direction keys to move the cursor to select the desired character. Such virtual keyboard needs to memorize the relation between the characters and their corresponding keys, or memorize the correspondence of a key with its corresponding character. Since the press key has a specified correspondence, therefore the flexibility and range of its use are restricted, and it is unable to increase the speed or add more functions. Further, it is necessary to press the direction keys for several times to select the desired characters, and such complicated operating procedure slows down the speed. US 5,990,890 A discloses a method and apparatus for providing method involves displaying a virtual table of selection items and on-screen pop-up symbols along both the x-axis and y-axis of the virtual table, in order to map the selection items to the appropriate input key to activate on the input device in order to select the corresponding selection item.

### Summary of the Invention

To overcome the difficulty of locating the marked character and the shortcoming of the slow and complicated operating procedure when inputting a character or text to the mobile phone or remote control, the present invention provides an input method applicable for texts, alphabets, symbols and/ or function keys for any languages, and this method can avoid the operating procedure from locating the marked characters on the keyboard, save the memory, and reduce the number of pressing the keys, so as to achieve a simple, convenient and fast input effect.

To achieve the foregoing objectives, the present invention provides an input method according to the independent claims 1 and 6. The dependent claims concern particular embodiments.

More specifically, the technical solution adopted by the present invention to solve the technical issues includes: integrating the inputted characters and/ or function keys into a plurality of character options to define a menu having columns in at least two rows to be displayed on a screen. The character option could be a single character or a single function key or a combination of several characters to be allocated for a local display menu on the screen. If the whole menu cannot be displayed at a time, then the menu is divided into several pages, and each page of the menu is displayed at a time. The present invention indicates that there also includes a number of other pages for the selection by using the pages selected indicating symbol and cooperates with the direction keys or function keys to complete the page selecting procedure. The character option displayed in the menu is arranged in the x, y-axis matrix. The horizontally arranged row is called a row, and the vertically arranged column is called a column, and a value of x-coordinate of the character option is listed on the upper section of the menu and controlled and selected the value of x-coordinate by the number keys, and there are at least two values for the y-axis of the character option rows. An initial y-axis value is set in advance, and the corresponding horizontal character option row is displayed by a method other than those for displaying other character option rows, such as using a reverse attribute or other different colors to represent the selected y-coordinate corresponding to the character option row. The direction keys are used to select the y-coordinates. A certain character option is going to be selected from a page of a menu, then first the corresponding direction keys are used to move the initial value of the y-coordinate to the y-coordinate of the character option row including the desired character option to complete a quick positioning of the y-coordinate so as to select a row. The number keys corresponding to the value of the x-coordinate of the desired character option are pressed to complete the quick positioning of the value of the x-coordinate, so as to input the contents of the desired character option. If the desired character option is not shown in the menu on the screen, the corresponding direction keys or the function keys are pressed and selected according to the pages selected indicating symbols to show the next page of the menu, until the page of the menu containing the desired character option appears. Similarly, the display or operation can be carried out according to the shape of the character option to interchange the way of setting the coordinates. In other words, the values of the y-coordinate are represented by numbers, and the value of the x-coordinate is displayed by the method other than that of other character option columns.

Therefore, as to the benefits of the present invention about the texts, alphabets, symbols and/ or function keys for any language, the desired character option is shown on the screen, and thus the invention can overcome the difficulties of locating the small characters crowded on a keyboard. With the simple method of using the direction keys, a row or a column of character options can be selected at a time. With the number keys for selecting the value of another coordinate, the desired character option can be positioned quickly, and thus reducing the number of keystrokes. Users can sense the keys from the coordinates of the screen, the marking of function keys and selected page without memorizing the correspondence between the characters and the press keys or memorizing the characters represented by each press key. The invention provides users a simple operation. Since more than one character of the desired character option adopted for the invention can be inputted at a time, and thus simplifying the operating procedure and achieve the simple, convenient and quick input effect.

### BRIEF DESCRIPTION OF THE DRAWINGS

Other features and advantages of the present invention will become apparent in the following detailed description of the preferred embodiments with reference to the accompanying drawings, in which:
FIG. 1 is a schematic view of a menu displaying the English letters in upper case on a screen according to the present invention;
FIG. 2 is a schematic view of number keys and direction keys according to the present invention;
FIG. 3 is a schematic view of pressing the number key "1" to select CL (Caps Lock) function key for displaying a menu in lower case English letters as depicted in FIG. 1 and then pressing the "Down" direction key to move the values of y-coordinate to the next row according to the present invention;
FIG. 4 is a schematic view of a screen displaying the first page of a menu for selecting the Chinese phonetics according to the present invention;
FIG. 5 is a schematic view of a screen displaying the second page of a menu for selecting the Chinese phonetics according to the present invention;
FIG. 6 is a schematic view of a Chinese phonetics menu displaying the interchangeable way of selecting the values of the coordinates after the sound "f" is selected as depicted in FIG. 4;
FIG. 7 is a schematic view of a menu for selecting the Chinese character roots by the Changjei input method displayed on screen;
FIG. 8 is a schematic view of a menu for the value of y-coordinate selected by the "Up" direction key as depicted in FIG. 7.

The numerals used in the figures are described as follows:
1 stands for the character option; 2 for the horizontal number row for the values of x-coordinate of the character options; 3 for the initial y coordinate value corresponding to a horizontal character option row; 4 for the Caps Lock function key; 5 for the Shift function key; 6 for Space key; 7 for the number keys; 8 for the direction keys; 9 for the page selected indicating symbol for selecting the next page; 10 is a character option having two characters; 11 for the page selected indicating symbol for selecting the previous page; 12 for the initial x-coordinate value corresponding to a vertical character option column; and 13 for the values of the y-coordinate of the vertical numerical column indicates the horizontal character option rows.

### DETAILED DESCRIPTION OF THE PREFERRED EMBODIMENTS

The present invention can be used for any languages and programming languages, and the following embodiments adopt the English language and Chinese language for the description, but the scope of the present invention is not limited to these languages only. Any modifications or similar arrangements and procedures are included in the scope of the appended claims and should be accorded the broadest interpretation so as to encompass all such modifications and similar arrangements and procedures.

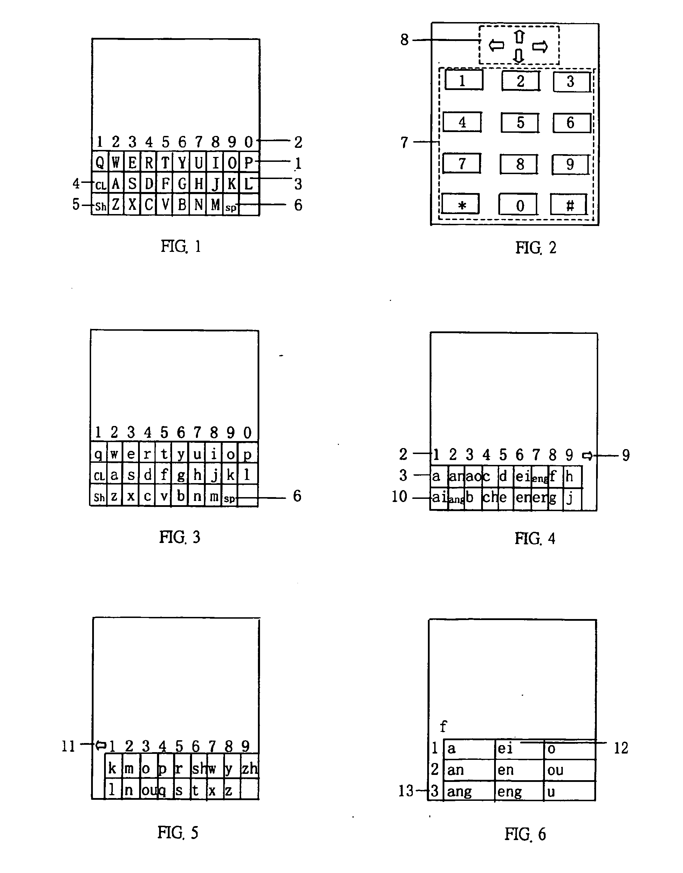

Referring to FIG. 1 for the first preferred embodiment of the present invention, the upper case English alphabets are displayed on a screen in accordance with the technology of the present invention. The x-coordinates mark a row of numbers 1, 2, ....0 (2) and the γ-coordinate points at the highlighted middle row (3). If it is necessary to enter "Abc", the operating procedure will be as follows:
1. In FIG 1, the number key "2" is pressed to select and enter "A".
2. In FIG. 1, the number key "1" is pressed to select the "CL" Caps Lock function key (4) to display the lower case alphabets on the screen.
3. The "Down" direction key is pressed to select the y-coordinate of the next row as shown in FIG. 3.
4. The number key "6" is pressed as shown in FIG. 3 to select and input "b". The y-coordinate will automatically return to the initial value which is the middle row.
5. The "Down" direction key is pressed to move the y-coordinate to the next row as shown in FIG. 3.
6. The number key "4" is pressed as shown in FIG. 3 to select and input "c", so as to complete the input of "Abc" , and the y-coordinate automatically returns to the initial value which is the middle row.

Therefore, it is not necessary to locate the small characters on the keyboard to input English or to memorize the corresponding relation between the characters and keys. Users just need to operate the general number keys and direction keys for a total of 6 times to complete entering the alphabets both in upper and lower cases.

Referring to FIG. 4 for the second embodiment of the present invention, the Chinese phonetics are integrated in the menu to be displayed on the screen, and the numbers of the horizontal number row including 1, 2,.... 9 at the utmost top of the x-coordinate are marked (2), and the initial value of the y-coordinate is pointed at the highlighted row (3), wherein the character options include a single character, two characters (10) and three characters. Since the menu has two pages, and the page selected indicating symbol (9) indicates to select the next page as shown in FIG. 4 or the page selected indicating symbol indicates to select the previous page as shown in FIG. 5. If it is necessary to enter "feng", then the operating procedure will be as follows:
1. The number key "8" is pressed as shown in FIG. 4 to select and input "f'. The screen will show the phonetic "f' and any possible character options thereafter as shown in FIG. 6. The numbers of the y-coordinate 1, 2, 3 at the utmost left row of the y-coordinate are marked (13), and the initial value of the x-coordinate is pointed at the middle highlighted column(12).
2. In FIG. 6, the number key "3" is pressed to select and input "eng" to complete entering the Chinese phonetics "feng", and users can find all of the Chinese characters with the same phonetics.

Therefore, users just need to press the number keys for two times to enter "feng", and also can find out all of the Chinese characters with the same phonetics for selection. Such arrangement is simple, convenient and quick, and does not require users to locate the small characters on the keyboard, or memorize the corresponding relation between the phonetics and the characters, or press the direction keys for many times for the positioning.

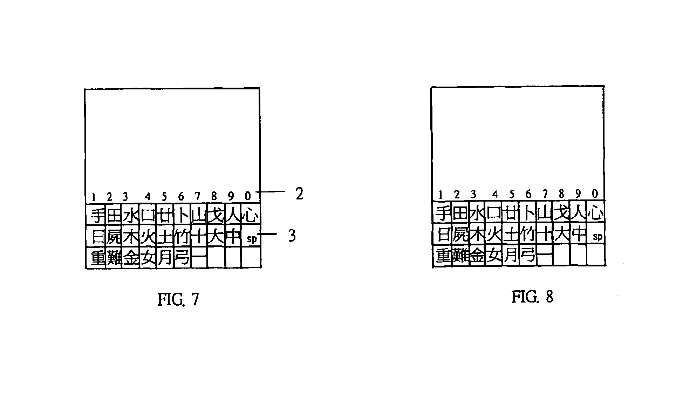

Referring to FIG. 7 for the third preferred embodiment of the present invention, the Chinese character roots of Changjei input method are integrated into the menu to be displayed on a screen, and the numbers 1, 2 ....9, 0 of the horizontal number row at the utmost top row of the x-coordinate are marked (2), and the initial value of the y-coordinate is pointed at the middle highlighted row (3). If it is necessary to input 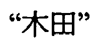 to form Chinese character 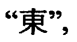 the operating procedure will be as follows:
1. In FIG. 7, the number key "3" is pressed to select and input 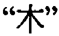 .
2. In FIG. 7, the "Up" direction key is pressed to move the y-coordinate to one row above as shown in FIG. 8.
3. In FIG. 8, the number key "2" is pressed to select and input 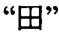 . The value of the y-coordinate automatically returns to the middle row as shown in FIG. 7.
4. In FIG. 7, the number key "0" is pressed to select and enter "space" to complete entering the Chinese character 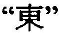 .

Therefore, users only need to press the keys for four times to enter the Chinese words 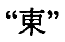 by the Changjei input method. Such arrangement is simple, convenient and quick, and users need not to find the small characters on the keyboard, or remember the corresponding relation between the Chinese character roots and the characters, or press the direction keys for many times for the positioning.

## Claims

1. An input method for an electronic device having number keys (7). direction keys (8), and a display screen and comprising the steps of :
displaying on the display screen a menu having a plurality of character options (1) arranged in an x, y-axis matrix with vertical columns and at least two horizontal rows, wherein each character option (1) is a single character, a single function key (4,5,6) or a combination of a plurality of characters (10), and wherein x-coordinate values of the character options (1) are listed in a horizontal number row (2) on the upper section of the menu, and wherein an initial y-coordinate value is set in advance and the corresponding horizontal character option row (3) is displayed differently from the other character option rows; selecting with the direction keys (8) the horizontal character option row that includes a desired character option ; and selecting with the number keys (7) value of the desired character option, so as to input the desired character option.

2. The input method of claim 1, wherein said a single character or a combination of a plurality of characters is selected from an element including texts, alphabets and symbols for any languages or their combinations.

3. The input method of claim 1, wherein said function key (4,5,6) is a key for controlling operating function.

4. The input method of claim 1, wherein said menu is divided into a plurality of pages if said menu is too large to be displayed in a page, and said direction keys (8,9,11) or function keys (4,5,6) are used to select each page and display one page at a time.

5. The input method of claim 1, wherein said direction keys (8,9,11) are direction controlling devices including direction keys, joysticks, rollers, dials or pointers.

6. An input method for an electronic device having number keys (7), direction keys (8), and a display screen and comprising the steps of:
displaying on the display screen a menu having a plurality of character options (1) arranged in an x,y-axis matrix with vertical columns and at least two horizontal rows,
wherein each character option (1) is a single character, a single function key (4,5,6) or a combination of a plurality of characters (10), and
wherein y-coordinate values of the character options (1) are listed in a vertical number column (13) at the left most section of the menu, and
wherein an initial x-coordinate value is set in advance and the corresponding vertical character option column (12) is displayed differently from the other character option rows;
selecting with the direction keys (8) the vertical character option column that includes a desired character option; and
selecting with the number keys (7) the y-coordinate value of the desired character option so as to input the desired character option.

## Patentansprüche

1. Ein Eingabeverfahren für eine Zifferntasten (7), Richtungstasten (8) und einen Anzeigebildschirm aufweisende elektronische Vorrichtung, das die folgenden Schritte aufweist:
Anzeigen eines Menüs auf dem Anzeigebildschirm, das eine Mehrzahl von Zeichenoptionen (1) aufweist, die in einer X-, Y-Achsen-Matrix mit vertikalen Spalten und mindestens zwei horizontalen Zeilen angeordnet sind, wobei jede Zeichenoption (1) ein einzelnes Zeichen, eine einzelne Funktionstaste (4, 5, 6) oder eine Kombination einer Mehrzahl von Zeichen (10) ist, und wobei X-Koordinatenwerte der Zeichenoptionen (1) in einer horizontalen Zahlenreihe (2) in dem oberen Abschnitt des Menüs aufgelistet sind, und wobei ein Anfangs-Y-Koordinatenwert im Vorfeld festgesetzt wird und die korrespondierende horizontale Zeichenoptionszeile (3) anders als die anderen Zeichenoptionsreihen angezeigt wird; Auswählen mit den Richtungstasten (8) der horizontalen Zeichenoptionszeile, die eine gewünschte Zeichenoption enthält, und Auswählen mit den Zifferntasten (7) des X-Koordinatenwertes der gewünschten Zeichenoption, um die gewünschte Zeichenoption einzugeben.

2. Das Eingabeverfahren gemäß Anspruch 1, wobei das einzelne Zeichen oder eine Kombination einer Mehrzahl von Zeichen aus einem Element ausgewählt wird, das Texte, Alphabete und Symbole für jede beliebige Sprache oder ihre Kombinationen enthält.

3. Das Eingabeverfahren gemäß Anspruch 1, wobei die Funktionstaste (4, 5, 6) eine Taste zum Steuern einer Betätigungsfunktion ist.

4. Das Eingabeverfahren gemäß Anspruch 1, wobei das Menü in eine Mehrzahl von Seiten aufgeteilt wird, wenn das Menü zu groß ist, um auf einer Seite angezeigt zu werden, und wobei die Richtungstasten (8, 9, 11) oder Funktionstasten (4, 5, 6) verwendet werden, um jede Seite auszuwählen und eine Seite einzeln anzuzeigen.

5. Das Eingabeverfahren gemäß Anspruch 1, wobei die Richtungstasten (8, 9, 11) Richtungssteuerungsvorrichtungen sind, die Richtungstasten, Joysticks, Rollen, Drehschalter oder Zeiger miteinschließen.

6. Ein Eingabeverfahren für eine Zifferntasten (7), Richtungstasten (8) und einen Anzeigebildschirm aufweisende elektronische Vorrichtung, ferner die folgenden Schritte aufweisend:
Anzeigen eines Menüs auf dem Anzeigebildschirm, das eine Mehrzahl von Zeichenoptionen (1) aufweist, die in einer X-, Y-Achsenmatrix mit vertikalen Spalten und mindestens zwei horizontalen Zeilen angeordnet sind,
wobei jede Zeichenoption (1) ein einzelnes Zeichen, eine einzelne Funktionstaste (4, 5, 6) oder eine Kombination einer Mehrzahl von Zeichen (10) ist, und
wobei Y-Koordinatenwerte der Zeichenoptionen (1) in einer vertikalen Zahlenspalte (13) an dem am weitesten links liegenden Abschnitt des Menüs aufgelistet sind, und
wobei ein Anfangs-X-Koordinatenwert im Vorfeld festgesetzt wird und die korrespondierende vertikale Zeichenoptionsspalte (12) anders als die anderen Zeichenoptionszeilen angezeigt wird,
Auswählen mit den Richtungstasten (8) der vertikalen Zeichenoptionsspalte, die eine gewünschte Zeichenoption enthält, und
Auswählen mit den Ziffertasten (7) des Y-Koordinatenwertes der gewünschten Zeichenoption, um die gewünschte Zeichenoption einzugeben.

## Revendications

1. Procédé d'entrée pour un dispositif électronique ayant des touches numériques (7), des touches fléchées (8) et un écran d'affichage, et comprenant les étapes consistant à :
afficher un menu sur l'écran d'affichage ayant une pluralité d'options de caractère (1) agencées suivant une matrice d'axes x, y avec des colonnes verticales et au moins deux rangées horizontales,
chaque option de caractère (1) étant un caractère unique, une touche de fonction unique (4, 5, 6) ou une combinaison d'une pluralité de caractères (10), et
les valeurs de coordonnée x des options de caractère (1) étant listées dans une rangée de chiffres horizontale (2) sur la section supérieure du menu, et
une valeur de coordonnée y initiale étant définie à l'avance et la rangée d'options de caractère horizontale correspondante (3) étant affichée de manière différente des autres rangées d'options de caractère ;
sélectionner, à l'aide des touches fléchées (8), la rangée d'options de caractère horizontale qui comprend une option de caractère désirée ; et
sélectionner, à l'aide des touches numériques (7), la valeur de coordonnée x de l'option de caractère désirée, de façon à entrer l'option de caractère désirée.

2. Procédé d'entrée selon la revendication 1, dans lequel ledit caractère unique ou ladite combinaison d'une pluralité de caractères est sélectionné à partir d'un élément comprenant des textes, des alphabets et des symboles pour n'importe quelles langues ou leurs combinaisons.

3. Procédé d'entrée selon la revendication 1, dans lequel ladite touche de fonction (4, 5, 6) est une touche pour commander une fonction de fonctionnement.

4. Procédé d'entrée selon la revendication 1, dans lequel ledit menu est divisé en une pluralité de pages si ledit menu est trop grand pour être affiché en une page, et lesdites touches fléchées (8, 9, 11) ou lesdites touches de fonction (4, 5, 6) sont utilisées pour sélectionner chaque page et afficher une page à la fois.

5. Procédé d'entrée selon la revendication 1, dans lequel lesdites touches fléchées (8, 9, 11) sont des dispositifs de commande de direction comprenant des touches fléchées, des manettes de jeu, des molettes, des cadrans ou des pointeurs.

6. Procédé d'entrée pour un dispositif électronique ayant des touches numériques (7), des touches fléchées (8) et un écran d'affichage, et comprenant les étapes consistant à :
afficher sur l'écran d'affichage un menu ayant une pluralité d'options de caractère (1) agencées suivant une matrice d'axes x, y avec des colonnes verticales et au moins deux rangées horizontales,
chaque option de caractère (1) étant un caractère unique, une touche de fonction unique (4, 5, 6) ou une combinaison d'une pluralité de caractères (10), et
les valeurs de coordonnée y des options de caractère (1) étant listées dans une colonne de chiffres verticale (13) à la section la plus à gauche du menu, et
une valeur de coordonnée x initiale étant définie à l'avance et la colonne d'options de caractère verticale correspondante (12) étant affichée de manière différente des autres rangées d'options de caractère ;
sélectionner, à l'aide des touches fléchées (8), la colonne d'options de caractère verticale qui comprend une option de caractère désirés et
sélectionner, à l'aide des touches numériques (7), la valeur de coordonnée de l'option de caractère désirée, de façon à entrer l'option de caractère désirée.
